(19) Europäisches Patentamt
European Patent Office
Office européen des brevets

(11) **EP 0 759 250 B1**

(12) **EUROPÄISCHE PATENTSCHRIFT**

(45) Veröffentlichungstag und Bekanntmachung des Hinweises auf die Patenterteilung:
**20.12.2000 Patentblatt 2000/51**

(21) Anmeldenummer: **95917268.5**

(22) Anmeldetag: **24.04.1995**

(51) Int. Cl.[7]: **H04N 5/217**

(86) Internationale Anmeldenummer:
**PCT/DE95/00580**

(87) Internationale Veröffentlichungsnummer:
**WO 95/31066 (16.11.1995 Gazette 1995/49)**

(54) **VERFAHREN UND VORRICHTUNG ZUR REDUZIERUNG DER BEWEGUNGSUNSCHÄRFE BZW. DES BILDRAUSCHENS BEI DER ABBILDUNG VON SICH BEWEGENDEN GEGENSTÄNDEN**

PROCESS AND DEVICE FOR REDUCING BLURRING DUE TO MOVEMENT AND IMAGE INTERFERENCE IN IMAGES OF MOVING OBJECTS

PROCEDE ET DISPOSITIF POUR LA REDUCTION DU FLOU DE MOUVEMENT OU DU BROUILLE DE L'IMAGE LORS DE LA VISUALISATION D'OBJETS EN MOUVEMENT

(84) Benannte Vertragsstaaten:
**DE FR IT**

(30) Priorität: **10.05.1994 DE 4416772**

(43) Veröffentlichungstag der Anmeldung:
**26.02.1997 Patentblatt 1997/09**

(73) Patentinhaber:
**MANNESMANN Aktiengesellschaft
40213 Düsseldorf (DE)**

(72) Erfinder: **SCHÖNARTZ, Norbert
D-40822 Mettmann (DE)**

(74) Vertreter:
**Meissner, Peter E., Dipl.-Ing. et al
Meissner & Meissner,
Patentanwaltsbüro,
Hohenzollerndamm 89
14199 Berlin (DE)**

(56) Entgegenhaltungen:
**EP-A- 0 471 444        EP-A- 0 534 438
FR-A- 2 344 833        US-A- 5 365 269**

- **PATENT ABSTRACTS OF JAPAN vol. 005 no. 107 (P-070) ,11.Juli 1981 & JP,A,56 049944 (MITSUBISHI CHEM IND LTD) 6.Mai 1981,**
- **W & S. WIRTSCHAFTSTECHNIK UND SICHERHEITSTECHNIK, Nr. 12, 1.Dezember 1992 HEIDELBERG, DEUTSCHLAND, Seiten 1080-1081, XP 000345166 'HOECHSTE BILDQUALITAT DURCH CCD-TECHNIK KAMERAS FUER DIE PROFESSIONELLE BILDVERARBEITUNG'**

**Beschreibung**

Die Erfindung betrifft ein Verfahren zur Reduzierung der Bewegungsunschärfe bzw. des Bildrauschens eines relativ kontinuierlich zu einem bildgebenden Flächensensor sich bewegenden Gegenstand.

Beim Einsatz bildgebender Flächensensoren spielt, insbesondere in der Meß- und Prüftechnik, die erreichbare Ortsauflösung eine entscheidende Rolle. Die wichtigsten Faktoren, die in der Praxis die erreichbare Ortsauflösung begrenzen, sind im allgemeinen:

Unschärfe bedingt durch - falls vorhanden - ein dem Matrix-Sensor vorgeschaltetes
Umwandlungssystem (z.B. Röntgenbildverstärker, welcher Röntgenquanten in sichtbares Licht umsetzt).
Unschärfe bedingt durch - falls vorhanden - eine vorgeschaltete Abbildungsoptik.
Unschärfe bedingt durch die Auflösung des Sensors selbst (z.B. aufgrund der begrenzten Anzahl von Pixeln).

-   Bewegungsunschärfe, die immer dann entsteht, wenn sich der Gegenstand während der Aufnahmezeit des Bildes relativ zum Sensor bewegt.

Im folgenden wird ein Verfahren beschrieben, mit dem die Bewegungsunschärfe in vielen Fällen reduziert werden kann. Die in den nachfolgenden Abschnitten verwendeten Abkürzungen bzw. Zeichen haben die folgende Bedeutung.

$t_{fr}$   Zeit zur Ausgabe eines Vollbildes im Videotakt, bei CCIR-Norm 40 ms
$t_{exp}$   Belichtungszeit des Kamerasensors während eines Videotaktes ($t_{exp} \leq t_{fr}$)
$t_{min}$   Minimale Belichtungszeit zur Erzielung eines geforderten Signal/Rauschverhältnisses
$v_{obj}$   Geschwindigkeit eines Gegenstandes im Gesichtsfeld der Kamera
$U_{mot}$   Durch Bewegung während der Aufnahmezeit verursachte Unschärfe des Gegenstandes im Videobild
$t_{mot}$   Maximale Belichtungszeit, bei der die zulässige Bewegungsunschärfe noch nicht überschritten wird
$[x]$   Die größte ganze Zahl, die kleiner oder gleich x ist (x sei eine reelle Zahl)

Bildgebende Flächensensoren (z.B. Videokameras, im folgenden kurz als Kamera bezeichnet) arbeiten normalerweise in einem festen Taktschema. Dabei wird während eines Taktes gleichzeitig der Sensor belichtet und - mit einem schnelleren Untertakt - die Bildinformation ausgelesen. Die maximale Bildfolgefrequenz ist durch die zum Auslesen eines Bildes benötigte Zeit $t_{fr}$ gegeben. Bei Standard-Videokameras nach CCIR-Norm ist diese Zeit $t_{fr}$ gleich der Belichtungszeit $t_{exp}$ des Sensors und beträgt 40 ins für ein Vollbild. Bei sogenannten Kurzzeitverschluß-Kameras kann die Belichtungszeit $t_{exp}$ des Sensors auch kürzer gewählt werden als die Auslesezeit $t_{fr}$.

Aus der zur Verfügung stehenden Lichtmenge (Beleuchtungsstärke), der Empfindlichkeit des Sensors und dem geforderten Signal/Rauschverhältnis ergibt sich der Minimalwert für die erforderliche effektive Belichtungszeit $t_{min}$ des Sensors.

Die Bewegungsunschärfe $U_{mot}$ eines Gegenstandes ergibt sich aus der Geschwindigkeit des aufgenommenen Gegenstandes $v_{obj}$ und der Belichtungszeit der Kamera $t_{exp}$:

$$U_{mot} = v_{obj} \cdot t_{exp} \tag{1}$$

Im allgemeinen gibt es für die zulässige Bewegungsunschärfe einen Maximalwert $U_{mot,max}$ bzw. bei vorgegebenem $v_{obj}$ einen entsprechenden Maximalwert für die Belichtungszeit $t_{mot}$.

Bezüglich $t_{mot}$, $t_{exp}$, $t_{fr}$ und $t_{min}$ lassen sich folgende wichtige Fälle unterscheiden:

1.

$$t_{min} \leq t_{exp} \leq = t_{fr} \leq t_{mot}$$

Das ist der Fall der Standard-Videokamera ohne Kurzzeitverschluß bei ausreichender Beleuchtungsstärke und geringen Anforderungen an die Bewegungsunschärfe bzw. langsam bewegtem Objekt.

2.

$$t_{min} \leq t_{exp} \leq t_{mot} \leq t_{fr}$$

Das ist der Fall der Kurzzeitverschlußkamera, bei der durch Verkürzen von $t_{exp}$ gegenüber $t_{mot}$ sichergestellt wird, daß die Bewegungsunschärfe hinreichend klein bleibt. Zur Erhaltung der für eine hinreichend rauschfreie Auf-

nahme notwendigen Bedingung $t_{min} \leq t_{exp}$ ist im allgemeinen eine sehr hohe Beleuchtungsstärke notwendig, die häufig nicht erzielt werden kann.

3.

$$t_{exp} = t_{fr} < t_{min} \leq t_{mot}$$

Die für ein hinreichend rauschfreies Bild notwendige Belichtung des Sensors kann nicht während eines Auslesetakts erzielt werden. Diese Situation ist z. B. häufig in radioskopischen Systemen mit Bildwandlern gegeben, bei denen wegen der begrenzten Intensität der Röntgenquelle und der statistischen Natur der Röntgenstrahlung insbesondere bei der Durchstrahlung stark absorbierender Bauteile zur Erreichung eines hinreichend rauschfreien Bildes Belichtungszeiten von mehreren Sekunden erforderlich sind. Das Standardverfahren zur Erzielung eines ausreichenden Signal/Rauschabstandes ist in diesen Fällen die sogenannte Bildintegration. Dabei wird in einem digitalen Bildverarbeitungssystem die Bildinformation mehrerer Auslesezyklen aufsummiert bzw. gemittelt. Die Zahl der erforderlichen Aufnahmezyklen beträgt dabei mindestens $[t_{min}/t_{fr}]$. Die Bedingung $t_{min} \leq t_{mot}$ für die Bewegungsunschärfe kann jedoch im allgemeinen nur bei nicht oder sehr langsam bewegten Objekten erfüllt werden. Deshalb ist z. B. nach dem Stand der Technik die radioskopische Prüfung dickwandiger Bauteile mit hoher Bildqualität nur bei ruhendem Prüfobjekt möglich.

4.

$$t_{mot} < t_{min}$$

Nach dem Stand der Technik ist in diesen Fällen eine Bildaufnahme mit ausreichender Qualität nicht möglich, da die zur Erzielung eines ausreichenden Signal/Rauschverhältnisses erforderliche Belichtungszeit zu einer zu großen Unschärfe bzw. eine Verkürzung der Belichtungszeit auf $t_{min}$ zu einer zu stark verrauschten Aufnahme führen würde.

Aus „ Patent Abstracts of JAPAN " (vol. 5 no 107(P-070), 11.07.1981 & JP-A-56-049 944) ist ein Verfahren zur Reduzierung der Bewegungsunschärfe bzw. des Rauschens des Bildes eines relativ kontinuierlich linear zu einem bildgebenden Flächensensor sich bewegenden Gegenstandes bekannt. Für die Aufintegration der Einzelbilder ist ein Bildverarbeitungssystem mit Bildspeicher vorgesehen.

Weiterhin ist aus der EP-A-0 471 444 ein nach dem „ time-delay and integration " (TDI) Verfahren arbeitendes System mit einer Videokamera bekannt.

Schließlich sei noch auf die EP-A-0 534 438 verwiesen, die ebenfalls Möglichkeiten zur Reduzierung des Rauschens des Bildes eines sich linear bewegenden Gegenstandes aufzeigt.

Hierbei erfolgt auch eine Aufintegration der Einzelbilder.

Aufgabe der Erfindung ist es, ein Verfahren anzugeben, das auch bei einem ungünstigen Verhältnis von Geschwindigkeit des Objektes zur Belichtungszeit des Sensors eine Röntgenbildaufnahme mit ausreichender Qualität ermöglicht.

Diese Aufgabe wird mit einem Verfahren gemäß Anspruch 1 gelöst.

Weiterbildende Verfahrensschritte sind Bestandteil von Unteransprüchen.

Der Grundgedanke ist dabei die ortsgetreue Aufintegration der Einzelbilder mittels eines speziellen Bildverarbeitungssystems, auf dessen Eigenschaften nachfolgend eingegangen wird.

Zur Vereinfachung der Beschreibung sei im folgenden vorausgesetzt, daß sich nur ein interessierender Gegenstand im Gesichtsfeld des Sensors befindet. Das Verfahren ist aber z.B. auch anwendbar, wenn sich mehrere Gegenstände gleichartig (d.h. mit gleicher Geschwindigkeit in gleicher Richtung und im gleichen Abstand) am Sensor vorbeibewegen. Ferner sei ohne Beschränkung der Allgemeinheit vereinfachend angenommen, daß der Gegenstand sich in einer Ebene senkrecht zur optischen Achse des Sensorsystems und in einer solchen Richtung bewege, daß ein Punkt P auf seiner Oberfläche beim Passieren des Gesichtsfelds des Sensors stets in derselben Zeile des Bildspeichers bleibt (Bewegung längs einer Zeile). Ferner sei angenommen, daß das Gesichtsfeld der Kamera auf einen Bereich des Bildspeichers der Größe m x n (Zeilen x Spalten) linear abgebildet werde; die folgenden Betrachtungen erfolgen daher ausschließlich in den Pixelkoordinaten des Bildspeichers.

4.1

$$t_{fr} \leq t_{mot} < t_{min}$$

In diesem Fall wäre die in einem-Auslesezyklus sich ergebende Unschärfe zwar noch zulässig, ein Auslesezyklus reicht jedoch nicht aus zur Erzeugung eines hinreichend rauschfreien Bildes. Andererseits würde das unter 3. beschriebene Verfahren der Bildintegration (Stand der Technik) zu einer nicht akzeptablen Bewegungsunschärfe führen. Ist jedoch die Geschwindigkeit des Objektes $v_{obj}$ zu jedem Zeitpunkt der Aufnahme bekannt, läßt sich mit einem speziellen Bildverarbeitungssystem in vielen Fällen eine ausreichende Bildqualität erzielen. Ist m x n die Größe des Kamerabildes (in Pixeln) im Bildspeicher, dann muß die Größe des Bildspeichers im allgemeinen mindestens m x 2n betragen. Der Gegenstand bewege sich während eines Videotaktes $t_{fr}$ maximal um j Pixel (0 < j < n; der Fall j=0 ist in 3. abgehandelt und nach dem Stand der Technik bereits lösbar).

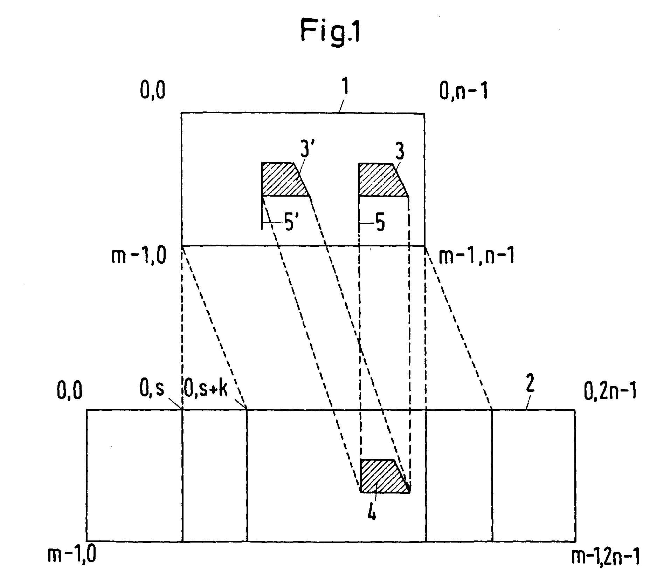

In Figur 1 ist der Grundgedanke der Erfindung dargestellt. Das Bild auf einem Kamerasensor l mit m Zeilen und n Spalten wird während eines Videotaktes t in einen bei der Spalte s beginnenden Bereich eines Bildspeichers 2 mit m Zeilen und 2n Spalten eingeschrieben. Dabei wird der Gegenstand 3 auf dem Bereich 4 des Bildspeichers 2 abgebildet. Bewegt sich nun der Gegenstand 3 bis zum nächsten Videotakt t+l von der Position 5 um k Pixel nach links zur Position 5', so wird das Bild des Kamerasensors in diesem Videotakt t+l auf den Bereich des Bildspeichers abgebildet, der bei Spalte s+k beginnt, wobei im Bereich der Spalten s+k bis s+n-l die Bildinformation der Takte t und t+l aufsummiert werden.

Der Bildspeicher des Bildverarbeitungssystems muß so ausgelegt sein, daß in jedem Videotakt ein Bild beginnend an einer beliebigen Spaltenadresse auf ein vorhandenes Bild aufsummiert werden kann und daß innerhalb des Videotaktes vor der Aufsummation mindestens k Spalten gelöscht werden können.

In jedem Fall wird der Bildspeicher als Ringspeicher benutzt, d. h. wenn während des Abspeicherns bzw. Aufsummierens eines Bildes die letzte Spalte (Spalte n-l) erreicht wird, wird der Rest des Bildes beginnend bei Spalte 0 weiter abgelegt. Das Fenster des Bildspeichers (Größe n x m), aus dein die Bildinformation zur Darstellung auf einem Monitor oder zur Weiterverarbeitung ausgelesen wird (Lesefenster), ist innerhalb des Bildspeichers ebenfalls frei wählbar und im allgemeinen nicht Identisch mit dem Fenster, das während desselben Taktes beschrieben wird (Schreibfenster).

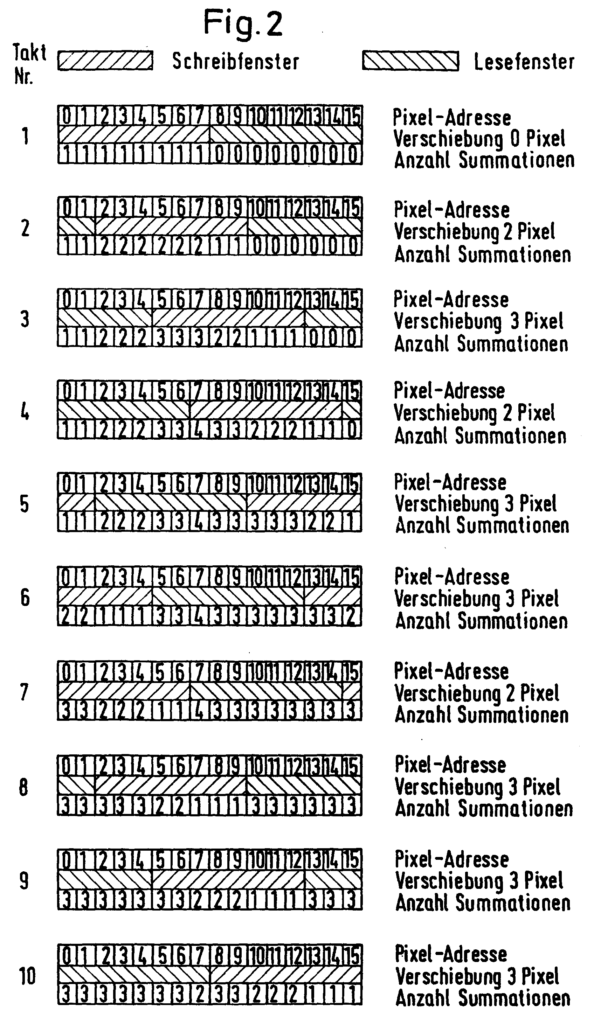

Vorzugsweise sind bei einem Bildspeicher der Größe 2n x m Schreibfenster und Lesefenster stets komplementär; dieser einfache Fall wird in der nun folgenden detaillierten Erklärung der Funktionsweise zugrundegelegt (siehe auch Figur 2). Unabhängig davon sind auch andere Konfigurationen vorstellbar.

Im Urzustand seien alle Pixel zunächst gelöscht, das Schreibfenster beginne bei Spalte 0 und das Lesefenster bei Spalte n. In der Figur 2 ist zur besseren Übersichtlichkeit der Fall m = 1 und n = 8 dargestellt; d.h. es wird nur eine Zeile des Bildspeichers betrachtet. Die aufeinander folgenden Videotakte sind jeweils untereinander dargestellt. Beim ersten Takt wird nun das Bild der Kamera in die Spalten 0 bis n-l (in Figur 2 Pixel 0 bis 7) eingeschrieben; das Auslesefenster (Spalten n bis 2n-l bzw. in Figur 2 Pixel 8 bis 15) bleibt dunkel. Bewegt sich nun der Gegenstand zwischen dem ersten und zweiten Takt um k Pixel (mit k ≤ j) in negativer Spaltenrichtung, werden Schreibfenster und Lesefenster im Bildspeicher um k Spalten verschoben, d. h. das Schreibfenster erstreckt sich von k bis n+k-l und das Lesefenster von n+k bis k-l. Für k > 0 werden die Spalten von n bis n+k-l mit dem Inhalt der Spalten n-k bis n-l der Kamera überschrieben; auf die Spalten k bis n-l werden die Spalten 0 bis n-k-l der Kamera aufsummiert. Im Lesefenster sind also nun k Spalten (0 bis k-l) aus dem vorhergehenden Videotakt zu sehen, allerdings noch ohne Aufsummation. Die nächste Verschiebung betrage l Pixel (mit l ≤ j) in negativer Spaltenrichtung; entsprechend werden Schreib- und Lesefenster um l Spalten verschoben. In den Spalten 0 bis k-l ist nun das ortsgetreu aufsummierte Signal zweier Videotakte zu sehen. Entsprechend wird in den weiteren Takten verfahren; im Lesefenster baut sich mit einer Verzögerung von n Pixeln gegenüber dem Schreibfenster ein zunehmend rauschfreies Bild auf. Sobald die Gesamtverschiebung n beträgt, Ist im Lesefenster komplett das Bild zu sehen, das gerade das Kam_eragesichtsfeld verlassen hat. Nach 2n Pixeln Gesamtverschiebung ist ein stationärer Zustand erreicht, bei dem alle Pixel des Lesefensters mindestens [n/j] mal belichtet worden sind, wenn j die maximal während eines Taktes aufgetretene Verschiebung ist, d. h. die Gesamtbelichtungszeit beträgt mindestens [n/j] $\cdot$ $t_{fr}$.

Bei dem oben dargestellten Schema wird nicht vorausgesetzt, daß die Bewegung gleichförmig erfolgt; dementsprechend müssen innerhalb des Lesefensters nicht alle Spalten gleich häufig belichtet worden sein. Würde man das Auslesefenster unverändert oder nur mit einer Konstanten transformiert auf einem Monitor darstellen oder weiterverarbeiten, ergäbe sich bei ungleichförmiger Bewegung ein ungleichmäßig belichtetes Bild. Um das zu verhindern, kann man jeder Spalte des Bildspeichers eine Zählvariable zuordnen, in der die Anzahl der Belichtungen dieser Spalte jeweils beginnend ab dem Löschen des Spalteninhaltes zu Beginn der Aufsummation mitgezählt werden. Dividiert man dann beim Auslesen des Lesefensters jedes Pixel einer Spalte durch das Produkt aus einem festen Skalierungsfaktor und dem Wert der zugeordneten Zählvariablen bekommt man ein gleichmäßig ausgeleuchtetes Bild.

Wenn im oben dargestellten Schema die Bilddaten der Kamera mit b Bit digitalisiert werden, muß die Tiefe t des Bildspeichers t=b+ [$\log_2$(n/v)+l betragen, wenn bei einer Verschiebung von mindestens v Pixeln pro Takt ein arithmetischer Überlauf im Bildspeicher verhindert werden soll. Dementsprechend würde nach obigem Schema bei stehendem Objekt und endlicher Tiefe des Bildspeichers nach gewisser Zeit ein Überlauf unvermeidlich eintreten. Dies kann man entweder dadurch verhindern, daß die Aufsummation des Kamerabildes unterbleibt, wenn keine Verschiebung gegenüber dem letzten aufsummierten Bild stattgefunden hat (dann findet aber auch keine Rauschreduktion statt), oder dadurch, daß bei Erreichen der maximal $2^{(t-b)}$ Summationen die entsprechenden Zeilen im Bildspeicher und die zugehörige Zählvariable durch 2 geteilt werden; dies ist als Bitschiebe-Operation leicht möglich. Will man den dadurch verursachten Verlust an Grauwertauflösung vermeiden, sollte die Speichertiefe auf t+l erhöht und die Division durch 2 erst nach $2^{(t-b+l)}$ Summationen durchgeführt werden.

Ist anderseits die Speichertiefe mit $s<(b+[\log_2(n/v)]+l)$ vorgegeben, kann das für die Integration des Standbildes vorgeschlagene Verfahren der zeilenweisen Division durch 2 bei Erreichen von $2^s$ Summationen ebenfalls angewendet werden, die effektive Rauschreduzierung ist aber geringer als bei einem Bildspeicher der Tiefe $t=b+[\log_2(n/v)]+l$. Alternativ kann die Aufsummation des Kamerabildes unterbleiben, wenn die Verschiebung gegenüber dem letzten aufsummierten Bild kleiner ist als $n/(2^{(s-b)})$, so daß maximal $2^{(s-b)}$ Bilder aufsummiert werden (damit erübrigt sich die Division durch 2; es findet im Spezialfall des stehenden Gegenstandes aber auch keine Rauschreduktion statt).

Die resultierende Unschärfe ergibt sich als Summe aus der während jeder Einzelbelichtung $t_{fr}$ auftretenden Unschärfe nach (1) und einem zusätzlichen Anteil von $\pm 0,5$ Pixeln, der dadurch bedingt ist, daß bei jedem Summationsvorgang die tatsächliche Verschiebung in das Pixelraster eingepaßt werden muß:

$$U_{mot}=v_{obj} \cdot t_{fr} + l \quad (U_{mot}\ \text{in Pixeln},\ v_{obj}\ \text{in Pixeln/s und}\ t_{fr}\ \text{in s}) \qquad (2)$$

4.2

$$t_{mot} < t_{fr} < t_{min}$$

In diesem Fall bewegt sich der Gegenstand so schnell, daß bereits während $t_{fr}$ eine unzulässige Bewegungsunschärfe entsteht; andererseits aber zur Rauschreduktion eine Integration erforderlich ist. Häufig kann auch in diesem Fall eine ausreichende Bildqualität erzielt werden, wenn wie unter 4.1 beschrieben verfahren wird, aber zur Bildaufnahme eine Kurzzeitverschlußkamera verwendet wird, deren Belichtungszeit so eingestellt wird, daß die Einhaltung der Bedingung $t_{mot} < t_{fr}$ gewährleistet ist. Damit erreicht man eine Gesamtbelichtungszeit von mindestens $[n/j]\ (t_{exp}/t_{fr})$. Die resultierende Unschärfe ergibt sich analog zu 4.1 zu:

$$U_{mot}=v_{obj}\ t_{exp} + l \quad (U_{mot}\ \text{in Pixeln},\ v_{obj}\ \text{in Pixeln/s und}\ t_{fr}\ \text{in s}) \qquad (3)$$

Im Gegensatz zu 4.1, wo $t_{exp} = t_{fr}$ vorgegeben ist und somit Bewegungsunschärfe und maximale Integrationszeit bei gegebener Bildgröße und Pixelauflösung nur von $v_{obj}$ abhängen, hat man hier die Möglichkeit, durch Verändern des Verhältnisses $t_{exp}/t_{fr}$ die Bildqualität gezielt bezüglich Bewegungsunschärfe oder Integrationszeit zu optimieren.

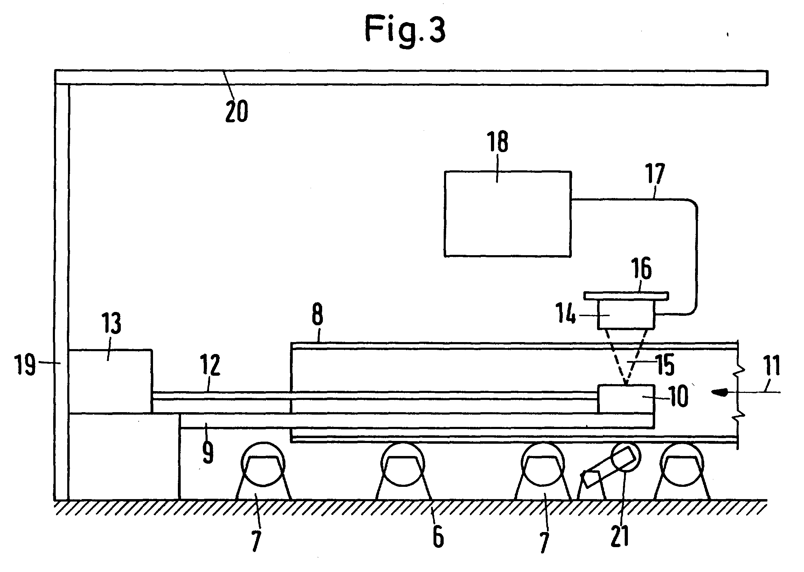

Nachfolgend wird an einem Beispiel die vorteilhafte Anwendung des erfindungsgemäßen Verfahrens näher erläutert (siehe Figur 3).

Auf einem Flur 6 einer erfindungsgemäßen Prüfeinrichtung sind mehrere Rollstände 7 angeordnet, die zusammen einen Längsrollgang für den zu prüfenden Hohlkörper bilden, in diesem Beispiel ein Rohr 8. Nicht dargestellt ist die der Prüfeinrichtung vorgeschaltete Schweißanlage, auf der kontinuierlich die Längsnaht aufgebracht wird. Das vorgeschlagene Prüfverfahren ermöglicht es nun, daß on-line im Takt der Schweißgeschwindigkeit die Schweißnaht geprüft wird. In das zu prüfende Rohr 8 ragt ein fester Holm 9, an dessen Ende die Röntgenröhre 10 angeordnet ist. Der Vorschub für das Rohr 8 ist durch einen Pfeil 11 gekennzeichnet. Zur Vereinfachung der Darstellung ist von den Versorgungsleitungen der Röntgenröhre 10 nur ein Hochspannungskabel 12 gezeichnet, welches mit dem hier nur angedeuteten Spannungsgenerator 13 verbunden ist. Zur Durchführung der flimlosen Radiografie ist außerhalb des Hohlkörpers 8 ein Röntgen-Bildwandler 14 angeordnet, und zwar so, daß die hier angedeuteten Röntgenstrahlen 15 immer auf den im Röntgen-Bildwandler 14 angeordneten flächigen Sensor fallen. Die Befestigung des Röntgen-Bildwandlers 14 erfolgt beispielsweise an einem hier nur angedeuteten Holm 16. Über ein Kabel 17 ist der Röntgen-Bildwandler 14 mit einem Bildverarbeitungssystem gemäß obiger Beschreibung 18 verbunden. Die Abschirmung der Anlage erfolgt üblicherweise durch Betonwände 19,20, wobei in dieser Darstellung nur die linke stirnseitige und die obere Abschirmung zu sehen sind. Die Vorschubgeschwindigkeit des Rohres 3 wird durch ein Meßrad 21 erfaßt, woraus die Verschiebung des Rohres 8 von Videotakt zu Videotakt bestimmt wird.

Beim Einsatz von Röntgen-Bildwandlern zur Schweißnahtprüfung an dickwandigen Hohlkörpern ist zur Erzielung eines hinreichend rauschfreien Bildes im allgemeinen eine effektive Belichtungszeit von etwa 0,5 bis 5 Sekunden erforderlich. Diese ergibt sich daraus, daß einerseits die Röntgenstrahlung quantisiert ist, so daß ein rauschfreies Bild sich nur ergibt, wenn die Gesamtzahl der den Bildwandler erreichenden Röntgenquanten hinreichend hoch ist, und daß andererseits aus technischen und physikalischen Gründen die die Intensität einer kontinuierlich strahlenden Röntgenröhre begrenzt ist (Anodenverlustleistung). Die Schweißgeschwindigkeit betrage beispielsweise 20 mm/s, der vom Bildwandler erfaßte Bildausschnitt habe die Größe 160mm x 120mm (normales CCIR-Video-Seitenverhältnis 4:3, die längere Seite in Schweißnahtrichtung). Die Auslesezeit $t_{fr}$ für ein Vollbild betrage entsprechend der CCIR-Norm 40 ms; die Bildgröße im Bildspeicher 512 x 512 Pixel. Daraus ergibt sich in Vorschubrichtung 11 eine Auflösung von 0,3125 mm/Pixel bzw. eine Geschwindigkeit von 64 Pixeln/s. Die erforderliche Belichtungszeit werde mit 1 s angenommen.

Dementsprechend ergibt sich bei einer Integration des Bildes nach dem Stand der Technik eine Unschärfe von 20 mm bzw. 64 Pixeln, so daß die Anwendung dieses Verfahrens zur Kontrolle des Schweißprozesses unsinnig wäre.

Beim erfindungsgemäßen Verfahren nach 4.1 ergibt sich nach (2) eine Unschärfe von ca. 3,5 Pixeln bzw. 1,1 mm, welche bereits das Auffinden größerer Ungänzen während des Schweißvorganges ermöglicht.

Noch wesentlich bessere Resultate lassen sich bei Einsatz des unter 4.2 beschriebenen Verfahrens erzielen. Bei einer Geschwindigkeit von 20 mm/s und einer Länge des Bildfensters von 160 mm bleibt jeder Punkt des Gegenstandes 8s bzw. 200 Aufnahmezyklen $t_{fr}$ im Bildfenster, so daß zur Erzielung einer Gesamtbelichtungszeit von 1 s die Einzelbelichtung $t_{exp}$ von 40 ms auf 5 ms reduziert werden kann. Damit ergibt sich die Unschärfe nach (3) zu ca. 1,3 Pixeln bzw. 0,4125 mm. Damit ist die Unschärfe nochmals fast um den Faktor 3 vermindert und im wesentlichen reduziert auf die auch bei stehendem Objekt vorgegebene Pixelauflösung. Ist hingegen eine Unschärfe von 0,5 mm (entsprechend 1,6 Pixeln) noch akzeptabel, ergibt sich durch Auflösen der Gleichung (3) eine Verschiebung von max. 0,6 Pixeln während $t_{exp}$ und damit $t_{exp}$ zu 0,6/64 s = 0,009375 s. Da max. 200-fach integriert werden kann, kann somit die Integrationszeit auf 1,875 s erhöht und damit eine weitere Rauschreduktion erzielt werden.

Viele Bildverarbeitungssysteme arbeiten mit einer Grauwertauflösung von 8 Bit und einer Bildspeichertiefe von 16 Bit für die Aufsummation bzw. Integration. Damit sind ohne Überlauf mindestens $2^8 = 256$ Summationen möglich, so daß im oben dargestellten Fall mit max. 200-facher Integration die o. a. Verfahren zur Verhinderung des Überlaufs nicht angewendet werden müssen. Die Verrückung von Scan zu Scan kann vielfach aus der Transportvorrichtung für den Gegenstand bzw. die Kamera abgeleitet werden. Auch eine unabhängige Bestimmung durch ein separates Wegmeßsystem, z. B. ein Laser-Doppler-Velemeter ist möglich. Prinzipiell ist jedoch auch denkbar, die Verrückung durch das Bildverarbeitungssystem selbst bestimmen zu lassen. Dazu wird jedes Kamerabild zunächst in einem Zwischenspeicher abgelegt und durch den Vergleich dieses Bildes mit dem bereits im eigentlichen Summations-Bildspeicher abgespeicherten Bild die Verrückung bestimmt, bevor das Bild aus dem Zwischenspeicher ortsgetreu aufsummiert wird. Die Bestimmung der Verrückung kann z. B. durch Korrelationsmethoden oder durch Bestimmung der Lage charakteristischer Bildelemente erfolgen (ein solches Verfahren zur Geschwindigkeits- bzw. Wegmessung mit einer Zeilenkamera ist z. B. aus der Patentschrift DE 3502406 bekannt).

## Patentansprüche

1. Verfahren zur Reduzierung der Bewegungsunschärfe bzw. des Rauschens des Röntgenbildes eines relativ kontinuierlich zu einem bildgebenden Flächensensor (1) sich bewegenden Gegenstandes (3), bei dem mittels eines einen Bildspeicher (2) aufweisenden Bildverarbeitungssystems Einzeibilder aufintegriert werden, dadurch gekennzeichnet, daß zur ortsgetreuen Aufintegration von Röntgenbildern in einer bestimmten Phase jedes Videotaktes die Verschiebung des Gegenstandes (3), bezogen auf seine Lage in derselben Phase des vorhergehenden Videotaktes, bekannt ist und in jedem Videotakt das Bild gegenüber dem vorigen Takt um k Spalten verschoben beginnend auf die dort im Bildspeicher (2) vorhandene Bildinformation pixelweise aufsummiert wird, wobei k die Verschiebung des Gegenstandes (3) gegenüber dem vorhergehenden Videotakt ist und bei den ersten k Spalten der dort vorher vorhandene Inhalt vor der Aufsummation gelöscht wird und daß jeder Spalte des Bildspeichers (2) eine Zählvariable zugeordnet wird, die die Anzahl der Aufsummationen der jeweiligen Spalte seit dem letzten Löschen des Spalteninhaltes zählt und daß bei oder nach Auslesen der Bildinformation aus dem Bildspeicher (2) der Inhalt jeder Spalte durch den Inhalt der Zählvariablen dividiert wird.

2. Verfahren nach Anspruch 1, dadurch gekennzeichnet, daß mittels der Zählvariablen ein arithmetischer Oberlauf dadurch verhindert wird, daß vor Eintritt des Oberlaufs der Inhalt der Spalte und der zugehörigen Zählvariablen durch eine Konstante > 1 dividiert werden.

3. Verfahren nach Anspruch 1, dadurch gekennzeichnet, daß zur Verminderung der Unschärfe innerhalb eines jeden Videotaktes eine Kurzzeitverschlußkamera eingesetzt wird.

4. Verfahren nach Anspruch 1, dadurch gekennzeichnet, daß der bildgebende Flächensensor eine Videokamera ist mit einem Gesichtsfeld der Größe m Zeilen x n Spalten und der als Ringspeicher ausgebildete Bildspeicher mit mindestens n + p Spalten ausgelegt ist, wobei p die innerhalb der zur Rauschverminderung erforderlichen Aufnahmedauer maximal auftretende Gesamtverschiebung des Gegenstandes ist.

**5.** Verfahren nach Anspruch 4, dadurch gekennzeichnet, daß das Fenster im Bildspeicher, aus dem während jedes Videotaktes die abgespeicherte Bildinformation ausgelesen wird, um mindestens p und maximal q Spalten gegenüber dem Schreibfenster versetzt ist, wobei (q+n)≥ (p+n) die tatsächliche Spaltenzahl des Bildspeichers ist.

## Claims

**1.** A method for reducing the motional distortion or the noise of the X-ray image of an object (3) moving continuously relative to an imaging sensor array (1), in which individual images are integrated by means of an image processing system having an image memory (2), characterised in that for the localised integration of X-ray images in a certain phase of each video cycle the displacement of the object (3), relative to its position in the same phase of the preceding video cycle, is known and in each video cycle the image is displaced by k columns relative to the preceding cycle, starting on the image information present there in the image memory (2) is added pixel-wise, k being the displacement of the object (3) compared with the preceding video cycle and in the first k columns the contents previously existing there being cancelled before adding, and that each column of the image memory (2) is allocated a counting variable which counts the number of adding operations of the respective column since the last cancellation of the column contents, and that during or after reading out the image information from the image memory (2) the contents of each column is divided by the contents of the counting variables.

**2.** A method according to Claim 1, characterised in that an arithmetic overrun is prevented by means of the counting variables in that before the overrun occurs the contents of the column and the associated counting variables are divided by a constant > 1.

**3.** A method according to Claim 1, characterised in that a fast-shutter camera is used in order to reduce the distortion within each video cycle.

**4.** A method according to Claim 1, characterised in that the imaging sensor array is a video camera having a field of view of the size m lines by n columns and the image memory designed as a toroidal-core store is designed with at least n + p columns, p being the maximum total displacement of the object which occurs within the recording time required for reducing noise.

**5.** A method according to Claim 4, characterised in that the window in the image memory from which the stored image information is read during each video cycle is offset by at least p and at most q columns from the writing window, with (q + n) ≥ (p + n) being the actual number of columns of the image memory.

## Revendications

**1.** Procédé pour réduire le flou de mouvement ou le bruit de fond de l'image de rayons X d'un objet (3) se déplaçant, de façon continue, relativement à un capteur plan (1) fournissant l'image, dans lequel des images individuelles sont intégrées au moyen d'un système de traitement d'images présentant une mémoire image (2), caractérisé en ce que, pour l'intégration fidèle locale d'images de rayons X dans une phase déterminée de chaque cycle vidéo, le déplacement de l'objet (3), relativement à sa position dans la même phase du cycle vidéo précédent, est connu et, dans chaque cycle vidéo, l'image est sommée par pixels de façon déplacée par rapport au cycle précédent de k colonnes en commençant par l'information d'image existant dans la mémoire image (2), k étant le déplacement de l'objet (3) par rapport au cycle vidéo précédent et, pour les premières k colonnes, le contenu y existant déjà est effacé avant la sommation, et en ce qu'une variable de comptage est associée à chaque colonne de la mémoire image (2), variable qui compte le nombre des sommations de la colonne respective depuis le dernier effacement du contenu de colonne, et en ce que, lors ou après lecture de l'information d'image à partir de la mémoire image (2), le contenu de chaque colonne est divisé par le contenu des variables de comptage.

**2.** Procédé selon la revendication 1, caractérisé en ce que, au moyen des variables de comptage, un flux arithmétique en excès est empêché en ce que, avant l'entrée du flux, le contenu de la colonne et des variables de comptage correspondantes est divisé par une constante > 1.

**3.** Procédé selon la revendication 1, caractérisé en ce que, pour diminuer le flou à l'intérieur de chaque cycle vidéo, il est utilisé une caméra à fermeture instantanée.

**4.** Procédé selon la revendication 1,
caractérisé en ce que le capteur plan fournissant l'image est une caméra vidéo ayant un champ présentant une taille de m lignes x n colonnes, et la mémoire image, réalisée comme mémoire annulaire, présente au moins n + p colonnes, p étant le déplacement total se produisant au maximum à l'intérieur de la durée de réception nécessaire pour diminuer le bruit de fond.

**5.** Procédé selon la revendication 4,
caractérisé en ce que la fenêtre dans la mémoire image, à partir de laquelle l'information d'image mémorisée est lue pendant chaque cycle vidéo, est décalée d'au moins p et d'au maximum q colonnes par rapport à la fenêtre d'écriture, $(q+n) \geq (p+n)$ étant le nombre de colonnes effectif de la mémoire image.

# Fig.1

EP 0 759 250 B1

## Fig.2

Takt Nr. | ▨▨▨ Schreibfenster | ◩◩◩ Lesefenster

1 — Pixel-Adresse / Verschiebung 0 Pixel / Anzahl Summationen

2 — Pixel-Adresse / Verschiebung 2 Pixel / Anzahl Summationen

3 — Pixel-Adresse / Verschiebung 3 Pixel / Anzahl Summationen

4 — Pixel-Adresse / Verschiebung 2 Pixel / Anzahl Summationen

5 — Pixel-Adresse / Verschiebung 3 Pixel / Anzahl Summationen

6 — Pixel-Adresse / Verschiebung 3 Pixel / Anzahl Summationen

7 — Pixel-Adresse / Verschiebung 2 Pixel / Anzahl Summationen

8 — Pixel-Adresse / Verschiebung 3 Pixel / Anzahl Summationen

9 — Pixel-Adresse / Verschiebung 3 Pixel / Anzahl Summationen

10 — Pixel-Adresse / Verschiebung 3 Pixel / Anzahl Summationen

# Fig.3